Europäisches Patentamt

European Patent Office

Office européen des brevets

(19)

(11) Numéro de publication : **0 401 351 B1**

(12) **FASCICULE DE BREVET EUROPEEN**

(45) Date de publication du fascicule du brevet :
01.09.93 Bulletin 93/35

(51) Int. Cl.⁵ : **G01B 11/00**

(21) Numéro de dépôt : **90900915.1**

(22) Date de dépôt : **05.12.89**

(86) Numéro de dépôt international :
**PCT/FR89/00630**

(87) Numéro de publication internationale :
**WO 90/06489 14.06.90 Gazette 90/14**

(54) **PROCEDE ET DISPOSITIF DE MESURE OPTIQUE.**

(30) Priorité : **05.12.88 FR 8815902**

(43) Date de publication de la demande :
**12.12.90 Bulletin 90/50**

(45) Mention de la délivrance du brevet :
**01.09.93 Bulletin 93/35**

(84) Etats contractants désignés :
**BE DE ES GB IT LU NL**

(56) Documents cités :
**EP-A- 0 133 120**
**EP-A- 0 244 781**
**WO-A-82/00514**
**WO-A-86/05587**
**DE-B- 1 030 582**
**US-A- 3 297 873**

(56) Documents cités :
**US-A- 3 913 128**
**US-A- 4 617 467**
**Patent Abstracts of Japan, vol. 9, no.**
**148(P-366)(1871), 22 June 1985 & JP-A-6026311**

(73) Titulaire : **NANO-MASTER**
**P.A. de St. Guénault 7, rue Jean Mermoz**
**F-91005 Evry Cedex (FR)**

(72) Inventeur : **HIGNETTE, Olivier**
**6, rue Paul-Eluard**
**F-91100 S.-Germain-les-Corbeil (FR)**
Inventeur : **LACOMBAT, Michel**
**81 bis, rue Curie**
**F-91400 Saclay (FR)**

(74) Mandataire : **Fort, Jacques**
**CABINET PLASSERAUD 84, rue d'Amsterdam**
**F-75009 Paris (FR)**

**EP 0 401 351 B1**

## Description

La présente invention concerne la mesure optique de dimensions, submicroniques ou voisines du micron, d'un objet, et la mesure de l'amplitude de recouvrement de deux objets, ou motifs superposés, et plus particulièrement un procédé et un dispositif permettant d'obtenir des précisions de mesure très élevées, inférieures au dixième de micron. L'invention trouve une application particulièrement importante, bien que non exclusive, dans le domaine du contrôle automatique des largeurs de traits sur des tranches portant des tracés de circuits intégrés à haute intégration, du recouvrement ("overlay" en terminologie anglo-saxonne) des couches minces constitutives desdites tranches, et/ou de la cartographie de tranche de circuits intégrés.

La technologie de production des circuits intégrés évolue rapidement et notamment la largeur des traits des circuits intégrés ne cesse de diminuer. Actuellement les technologies de production de circuits intégrés permettent la gravure de traits de l'ordre du micron, mais ces technologies sont rapidement dépassées. Des traits de 0,1 micron sont d'ores et déjà obtenus expérimentalement et le programme américain SEMATECH (Semi Conductor Manufacturing Technology) prévoit le développement d'une technologie de production de mémoires statiques SRAM de 16 Mégabits avec des largeurs de traits de 0,3 micron et un déchet inférieur à 3% pour le début des années 1990.

Il devient donc impératif d'améliorer, à la fois en précision et en fiabilité, la mesure des dimensions critiques des traits submicroniques. L'objectif de précision de mesure des dimensions critiques pour les technologies futures de production de circuits intégrés est de l'ordre de 0,01$\mu$m. Aucun procédé, ni dispositif de l'art antérieur ne permet de remplir de telles spécifications.

De même les degrés de recouvrement entre les motifs, normalement superposés, de deux couches de circuits intégrés doivent pouvoir être controlés avec une meilleur précision ; en effet, les mesures sur les recouvrements des couches par vernier optique ou par contrôle électronique ne sont pas satisfaisantes, tout du moins à certains stades de production d'une tranche.

La présente invention vise à fournir un procédé et un dispositif de mesure optique répondant mieux que ceux antérieurement connus aux exigences de la pratique, notamment en ce qu'ils permettent une précision jusqu'ici inégalée dans les mesures de largeur de traits et les mesures sur les recouvrements entre couches, avec une grande fiabilité et une aptitude à la répétition également exceptionnelle, ce qui permet de les automatiser. Par exemple, on a pu obtenir une précision de l'ordre de $\pm$ 0,02$\mu$m sur des traits de largeur 0,5$\mu$m sur une couche mince (épaisseur inférieure à 800 nm) ou une précision de l'ordre de $\pm$ 50 nm sur le recouvrement de couches métalliques épaisses (> 4$\mu$m).

Pour ce faire, les inventeurs ont orienté leur recherche sur un dispositif du type opto-mécanique, utilisant un microscope avec lampe à arc, alors que, a priori, une telle conception n'est pas satisfaisante pour atteindre les résultats recherchés. La résolution optique est en effet limitée à environ 0,5 micron en lumière visible. De plus, la chaleur dégagée par une lampe à arc et/ou les pertes en luminance observées avec les dispositifs de l'art antérieur lorsque la source lumineuse est éloignée de l'emplacement de mesure sont trop importantes pour laisser envisager des résultats intéressants.

L'utilisation d'ultraviolets (U.V.) permettant une meilleure résolution, semble a priori exclue, toujours à cause des pertes importantes en luminance observées avec des dispositifs du type ci-dessus dans l'art antérieur et/ou de la chaleur dégagée par les lampes à arc émettrices d'U.V.

Le document WO-A-86/05587 décrit un dispositif de mesure optique conforme au préambule de la revendication 1 et un procédé permettant de le mettre en oeuvre. Ce dispositif de mesure optique effectue une illumination directe de l'objet à partir de la lumière fournie par un laser U.V. ou par un illuminateur. Une telle disposition ne permettrait pas d'utiliser comme source une lampe à arc dont l'avantage est de fournir un spectre s'étendant très loin dans l'ultraviolet, mais qui a l'inconvénient d'un dégagement thermique.

Les inventeurs se sont par ailleurs heurtés au problème de l'obtention d'une uniformité sensiblement constante, à $\pm$ 2% près, dans les plans pupille (II) et objet (I) de l'optique utilisée.

A titre indicatif, les dispositifs optiques de l'art antérieur, présentent, au mieux, une uniformité de champ lointain, dans le plan objet (I), de l'ordre de 10%, et une uniformité de champ proche dans le plan pupille (II) franchement mauvaise (> 20%). De tels défauts dans les dispositifs de l'art antérieur sont rédhibitoires et ne permettent pas les performances recherchées pour le contrôle des dimensions critiques des circuits intégrés à haute intégration (VLSI) des années futures. A titre d'art antérieur, il faut encore citer des moyens de modélisation mathématique de l'image qui permettent de reconstituer les dimensions d'une image avec une pression dépassant le pouvoir séparateur de l'optique utilisée, pour des plages de longueur d'onde données.

Les principes d'une telle modélisation pour le contrôle des dimensions critiques, sont décrits dans l'article : "Accurate image modeling for submicron CD optical control" de M.E. Guillaume, P. Livrozet, J.L. Buevoz et M. Alcouffe-Noally (Microelectric engineering 6-1987).

On connaît enfin une méthode de mesure des recouvrements dont les principes ont été décrits dans un

2

autre article : "A new signal processing method for overlay and grid characterization measurements" de O. Hignette, M. Alcouffe-Noally et M.E. Guillaume (Microelectronic Engineering 6-1987; 637-643) ; cette méthode est susceptible d'être utilisée dans la mise en oeuvre de l'invention.

L'invention vise à fournir un procédé et un dispositif de contrôle de circuits intégrés autorisant la mise en oeuvre effective de ces méthodes et surtout donnant des résultats industriels améliorés, et ce notamment en améliorant les performances en luminosité et en uniformité dans les plans pupille (II) et objet (I) d'au moins un ordre de grandeur par rapport à l'art antérieur.

Dans ce but l'invention propose notamment un procédé de mesure optique de dimension submicronique d'un objet ou du recouvrement entre deux objets conforme à la revendication 1.

Une méthode simple de traitement est constituée par la comparaison avec une valeur de seuil prédéterminée, éventuellement ajustable. Une méthode plus performante, mais plus complexe, utilise la transformée de Fourier pour la reconstitution des frontières et l'intercorrélation mathématique des signaux obtenus avec l'image symétrique desdits signaux par rapport à une origine arbitraire pour mesurer le degré de recouvrement.

L'utilisation d'une monofibre optique en silice pure de grand diamètre (500µm à 1mm), réalisée permet le transport de la lumière sur plusieurs mètres sans atténuation sensible de luminance contrairement par exemple à l'utilisation d'un faisceau optique multifibres. Il est donc possible de déporter la source de lumière hors de la salle blanche dans laquelle sont contrôlés les circuits intégrés. On élimine ainsi la source de chaleur et de poussières constituée par la source de lumière elle-même, ce qui permet, d'une part, d'améliorer les conditions de mesures et, d'autre part, d'utiliser une lampe très énergétique du type lampe à arc.

Il semblait que les défauts structurels d'une monofibre optique de gros diamètre (> 500µm) , en particulier l'état de sa surface de sortie, la fassent exclure a priori d'un dispositif pour lequel une très grande précision est recherchée.

Contrairement à cette idée reçue, les inventeurs ont constaté qu'avec le procédé de l'invention et le dispositif permettant de la mettre en oeuvre, des résultats exceptionnels pouvaient être obtenus.

Dans un mode avantageux de réalisation, le procédé utilise, d'une part, de la lumière visible et, d'autre part, de la lumière ultraviolette.

L'utilisation de la lumière ultraviolette pour le contrôle et la mesure des très petites dimensions est particulièrement intéressante. D'une part, elle permet d'abaisser la limite de résolution (proportionnelle à la longueur d'onde) et d'autre part, elle confère à l'objet observé un profil de frontière nettement plus stable pour peu qu'on utilise une largeur spectrale suffisante de la source (> 20nm). Les algorithmes utilisés pour obtenir les précisions recherchées en sont d'autant simplifiés et l'aptitude à la répétition des mesures est également améliorée.

L'invention propose également un dispositif permettant de mettre en oeuvre le procédé ci-dessus défini, conforme à la revendication 3.

Dans des modes de réalisation avantageux on a recours en outre à l'une et/ou à l'autre des dispositions suivantes :

- le dispositif comprend des moyens, placés sur le trajet du pinceau réfléchi par l'objet et sortant de l'objectif du microscope, pour séparer la composante U.V. de la composante visible, envoyer la composante U.V. vers une caméra à matrice de capteurs sensibles aux U.V., et envoyer la composante visible vers une caméra à matrice de capteurs en lumière visible ;
- le condenseur de lumière est un condenseur achromatique dans le visible et l'ultraviolet comprenant :
    un filtre dichroïque anticalorique,
    un premier miroir paraboloïdique hors d'axe propre à collimater la lumière qu'il réfléchit vers un deuxième miroir paraboloïdique hors d'axe propre à recondenser ladite lumière en un point et,
    des moyens de filtrage de ladite lumière dans le visible et l'ultraviolet disposés sur le trajet du faisceau de lumière collimaté entre les deux miroirs paraboloïdiques hors axes,
- le dispositif comprend des moyens placés sur le trajet du pinceau réfléchi pour diriger au moins microscope pour renvoyer au moins une partie de l'énergie du pinceau réfléchi vers le capteur d'une caméra couleur fournissant une représentation visuelle de l'objet observé,
- le dispositif comprend des moyens placés sur le trajet de pinceau réfléchi pour diriger au moins une partie de l'énergie dudit pinceau réfléchi vers des moyens d'analyse spectrophotométriques et, à partir des moyens de traitement des signaux obtenus sur la ou les caméras matricielles, pour minimiser les contrastes entre l'objet et son environnement immédiat ;

De façon surprenante, ces moyens permettent en effet d'obtenir une meilleure précision dans la mesure de Contrôle Dimensionnel (C.D.) pour mesurer l'information sur les bords d'un objet,

- les moyens de traitement des signaux obtenus par la ou les caméras à matrice de capteurs comportent des moyens de mesure de la largeur de traits sur une tranche et/ou la mesure du recouvrement des couches minces constitutives d'une tranche,

- le dispositif comporte des moyens optiques permettant d'effectuer une mesure de l'objet soit sur fond clair, soit sur fond noir,
- le dispositif comporte des moyens interférométriques en lumière cohérente de positionnement par rapport à une position de référence d'une table sur laquelle l'objet observé est placé, lesdits moyens compenant un miroir de référence relié rigidement à l'objectif de mesure du microscope et un miroir fixé rigidement à la table, la mesure différentielle de l'interféromètre s'effectuant entre ledit miroir et un miroir fixé rigidement à la table.

Une telle disposition engendre une excellente aptitude à la répétition des mesures, par exemple de 30 nm à $3\sigma$ sur 200 mm, ce qui présente un grand intérêt en cartographie des circuits intégrés.

L'invention sera mieux comprise à la lecture de la description qui suit d'un mode particulier de réalisation, donné à titre d'exemple non limitatif.

La description se réfère aux dessins qui l'accompagnent dans lesquels :
- la figure 1 est un schéma en perspective montrant un appareil comprenant un mode de réalisation du dispositif selon l'invention;
- la figure 2 est un schéma de principe d'un mode de réalisation du dispositif selon l'invention ;
- la figure 3 est un schéma de principe d'un mode de réalisation avantageux du condenseur du dispositif selon l'invention ;
- la figure 4 est un schéma de principe d'un montage d'interféromètre de mesure de position sur le dispositif ;
- la figure 5 montre un mode de réalisation particulier, en coupe et en élévation, de la partie optique d'une partie du dispositif de la figure 2 ;
- la figure 6 est une vue de dessus, en coupe, de la figure 5 ;
- la figure 7 est un schéma montrant le fonctionnement mécanique de l'appareil de la figure 1, comprenant un dispositif selon l'invention.

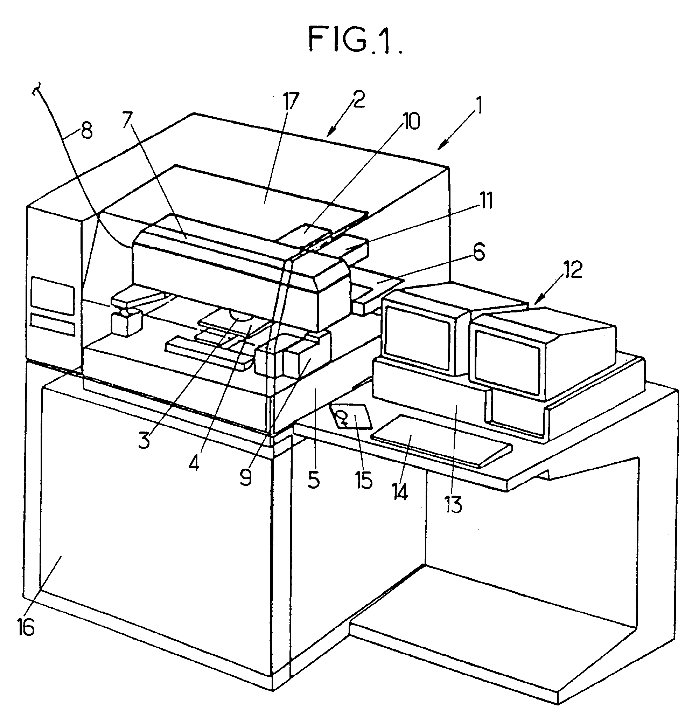

La figure 1 montre un appareil 1 comportant un dispositif 2 de mesure optique selon l'invention d'un objet, par exemple constitué par un trait d'une tranche 3 comportant des tracés de circuit intégré. Cette tranche 3 est placée sur une table 4 reposant elle-même sur coussin d'air de façon connue en soi, sur un socle 5, par exemple en granit. Elle est ainsi totalement isolée des vibrations ambiantes.

Des moyens de déplacement de la table dans le plan horizontal selon deux axes orthogonaux Ox, Oy, constituant un repère de référence, sont prévus. Ils comportent notamment des moyens interférométriques 6 de positionnement extrêmement précis de la table 4 dans le repère Ox, Oy.

Ces moyens 6 comprennent un interféromètre laser de type connu et permettant une précision de positionnement mécanique de l'ordre de 0,01 $\mu$m.

Le dispositif 2 comprend un microscope optique automatique 7 relié par une fibre optique 8 à une source lumineuse éloignée (non représentée sur la figure 1).

Des moyens 9, par exemple constitués par des micro-vérins électriques, permettent le déplacement du microscope 7 selon un axe Oz perpendiculaire au plan horizontal constitué par le repère Ox, Oy. Des moyens d'autofocalisation 10 assurent la mise au point automatique du microscope 7 sur la tranche 3. Au moins une caméra à matrice de capteurs 11 à couplage de charges (CCD) est prévue. Elle est reliée aux moyens 12 de visualisation et de traitement des signaux, comprenant par exemple un ordinateur 13 du type PC et ses organes de commande tels qu'un clavier 14 et/ou une souris 15. L'appareil 1 comprend également une armoire électrique 16 d'alimentation en puissance et en contrôle du dispositif 2.

Un capot étanche 17 de protection du microscope est prévu et permet le fonctionnement dudit microscope en milieu parfaitement propre. La chaleur dégagée à l'intérieur du capot est évacuée par un circuit de refroidissement connu en lui-même (non représenté).

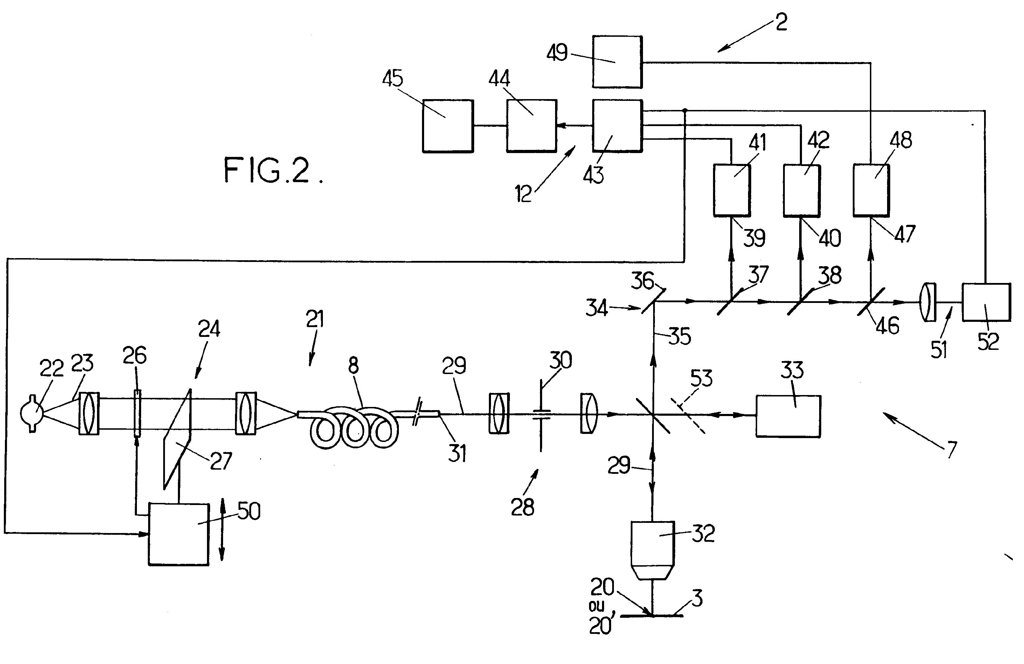

La figure 2 est un schéma de principe d'un mode avantageux de réalisation du dispositif 2 selon l'invention. Il permet de mesurer les dimensions submicroniques d'un trait 20 de tranche 3 de circuit intégré ou du recouvrement entre deux couches 20' constitutives d'un circuit intégré sur une tranche 3. Il comprend un système 21 à monofibre optique comportant une lampe à arc 22, par exemple au xénon, émettrice d'un faisceau lumineux 23 multispectral (U.V., visible), un condenseur 24 et une monofibre optique 8.

La fibre 8 est en silice pratiquement pure, de diamètre supérieur à 500 $\mu$m, par exemple avantageusement 1 mm, et de longueur importante, souvent supérieure à 3m. Cette longueur permet au système à fibre optique 21 d'être éloigné du microscope optique automatique 7 qui n'est donc pas perturbé par la source de chaleur et de nuisances constituée par la lampe à arc 22.

La fibre optique 8 peut être partiellement enroulée sur elle-même pour homogénéiser le faisceau de lumière qu'elle véhicule.

Le condenseur 24 comporte avantageusement un filtre 26 permettant de ne conserver que des plages étroites autour de deux longueurs d'ondes sélectionnées dans le visible et l'U.V. et un modulateur 27 de densité lumineuse du faisceau lumineux émis par la lampe à arc 22 ; en variante, deux filtres 26 sont prévus, transparents l'un dans le visible, l'autre dans l'ultra-violet (par exemple vers 300 nm, où la lampe à arc a encore une émission importante.

Le filtre 26 permet de faire varier en continu les longueurs d'ondes utilisées. Les déplacements du filtre par rapport au faisceau lumineux peuvent être automatiques et commandés par l'ordinateur 13.

Le faisceau 23 est focalisé par le condenseur 24 sur la surface d'entrée de la monofibre optique 8. Le faisceau lumineux sort ensuite de la monofibre sous forme d'un pinceau 29 par une surface de sortie 31 parfaitement plane. Des moyens 28 placés sur le trajet du pinceau 29 dirigent ensuite sous une incidence normale le pinceau 29 vers l'objet 20 de la tranche 3. Ces moyens 28 comportent un diaphragme 30 de centrage du faisceau. Le diaphragme est avantageusement amovible. Par exemple, quatre diaphragmes d'ouverture différente peuvent être sélectionnés pour obtenir un éclairage de l'objet parfaitement centré.

Le faisceau 29 est dirigé sous incidence normale par un miroir ou une lame séparatrice sur l'objet 20 via un objectif 32 du microscope 7. Le microscope comporte avantageusement plusieurs objectifs, par exemple quatre objectifs, qui couvrent un champ de allant de 60 μm à 1,5 mm avec des grandissements de 2,5X, 20X, 50X et 80X.

Des moyens 33 de mise au point automatique de l'objectif 32 sur l'objet sont prévus. Ils peuvent être constitués par un système d'autofocalisation du type de celui décrit dans la demande de brevet français n° 87 12699 du même déposant déjà mentionnée et à laquelle on pourra se reporter. Le système d'autofocalisation utilise une sonde à diode laser travaillant dans l'infrarouge (à 780 μm par exemple), dont la résolution est limitée par la diffraction. Il fournit un signal d'erreur provoquant le fonctionnaient d'un moteur qui maintient l'objectif à une altitude constante par rapport à l'objet, lors des déplacements en translation de ce dernier. Pour permettre un fonctionnement correct, l'objectif est achromatisé.

Le dispositif 2 comprend des moyens 34 placés sur le trajet du pinceau 35 réfléchi par l'objet, via l'objectif 32 du microscope 7. Ces moyens ont un premier miroir de renvoi 36 et des lames séparatrices 37, 38 qui renvoient des parties du pinceau réfléchi 35 respectivement vers les matrices de capteurs 39, 40 des caméras correspondantes 41, 42 à matrice de capteurs à couplage de charge.

Par exemple, le miroir 37 sépare la composante U.V. de la composante visible et renvoie la composante U.V. vers la matrice de capteurs 39 de la caméra U.V. 41, et la composante visible vers le miroir 38 qui renvoie au moins une partie du faisceau en lumière visible vers la matrice de capteurs 40 de la caméra matricielle 42.

Les caméras 41, 42 sont reliées à des moyens de numérisation 43 fournissant une représentation, pixel par pixel, du champ du microscope à des moyens 44 de traitement des signaux reçus. Les moyens 44 sont constitués par au moins un ordinateur ayant une unité de commande et des mémoires mettant en oeuvre des programmes informatiques mémorisés. Les moyens 44 sont agencés pour traiter les signaux et reconstituer, à partir des signaux, les frontières de l'objet ou le recouvrement entre deux objets, notamment lorsque leurs dimensions sont inférieures à la limite de résolution de l'optique aux longueurs d'ondes prédéterminées sélectionnées par le filtre 26. Des périphériques 45 de contrôle et de commande du dispositif sont connectés aux moyens de traitement 44.

Les moyens de traitement des signaux peuvent être prévus pour trouver, dans le cas de la mesure de recouvrement ("overlay"), la position du centre d'une figure symétrique par rapport à une métrologie déterminée (ici la caméra matricielle CCD) comme cela est décrit dans l'article de O. Hignette, M. Alcouffe-Moally et M.E. Guillaume, ci-dessus mentionné. Pour cela, les moyens 44 comprennent des moyens d'intercorrélation mathématique de la figure obtenue par le capteur avec son image symétrique ou miroir par rapport à une origine arbitraire. La position du maximum obtenue avec la figure d'intercorrélation détermine une distance pour la première couche, puis pour la seconde. Par différence, on obtient la dimension du recouvrement entre les deux couches, grâce à des moyens de différence et de restitution du résultat, avec la précision recherchée.

Dans le cas du contrôle dimensionnel, c'est-à-dire de la mesure de la largeur d'un trait, les moyens de traitement des signaux peuvent comprendre des moyens de modèlisation mathématique permettant la formation d'images à partir des signaux reçus par décomposition desdits signaux en fonctions orthogonales sinus et cosinus dans le domaine de fréquences spatiales correspondant à la transformée de Fourier desdits signaux spatiaux captés.

Cette modélisation, décrite dans l'article de M.E. Guillaume, P. Livrozet, J.L. Buevoz et M. Alcouffe-Noally ci-dessus mentionné, permet d'inverser le problème physique, c'est-à-dire, en partant de données expérimentales (profil photométrique) et en appliquant une fonction de transfert, de rechercher la meilleure correspondance entre données physiques et données modélisées en faisant varier les paramètres du modèle suivant des algorithmes convergeant rapidement (méthode des moindres carrés, Newton Ralphson, entropie maximale, etc.). Les paramètres du modèle donnent alors la largeur recherchée.

Le dispositif 2 comprend également des moyens 46, constitués par une lame séparatrice interposée sur le pinceau ayant traversé la lame séparatrice 38, pour renvoyer au moins une partie de l'énergie du pinceau vers l'objectif 47 d'une caméra couleur 48 fournissant une représentation visuelle de l'objet observé, par exemple sur un écran 49.

Il est possible de faire varier la densité lumineuse du faisceau 23, par l'intermédiaire de moyens 50 comprenant un moteur ou un vérin électrique agissant sur une lame constituant le modulateur de densité lumineuse 27 appartenant au condenseur 24.

Les moyens 50 peuvent agir également sur le filtre 26 par l'intermédiaire d'un second vérin électrique qui, en déplaçant le filtre 26 perpendiculairement au faisceau, fait varier en continu et de façon automatique les longueurs d'ondes utilisées.

Dans un mode préféré de réalisation du dispositif selon l'invention, des moyens 51 sont placés sur le trajet d'au moins une partie de l'énergie du pinceau réfléchi par l'objet 20 (après la lame 46 dans le cas représenté sur la figure 2) pour diriger cette partie de l'énergie vers des moyens d'analyse spectrophotométriques 52 connus en eux-mêmes. Ces moyens 52 agissent sur les moyens 50 de commande du filtre 26 et du variateur de densité 27, et permettent ainsi de minimiser les contrastes entre l'objet et son environnement immédiat ; ceci permet d'améliorer les performances du microscope en contrôle dimensionnel (C.D.).

Le dispositif 2 peut comprendre également des moyens 53 permettant d'effectuer une mesure de l'objet, soit sur fond clair, soit sur fond noir. Ils sont représentés en pointillé de façon schématique sur la figure 2 et sont connus en eux-mêmes.

La mesure sur fond noir permet de minimiser les lumières parasites et en combinant, par exemple systématiquement et automatiquement, une mesure sur fond clair et une mesure sur fond noir d'un même objet, la mesure gagne encore en précision et en fiabilité.

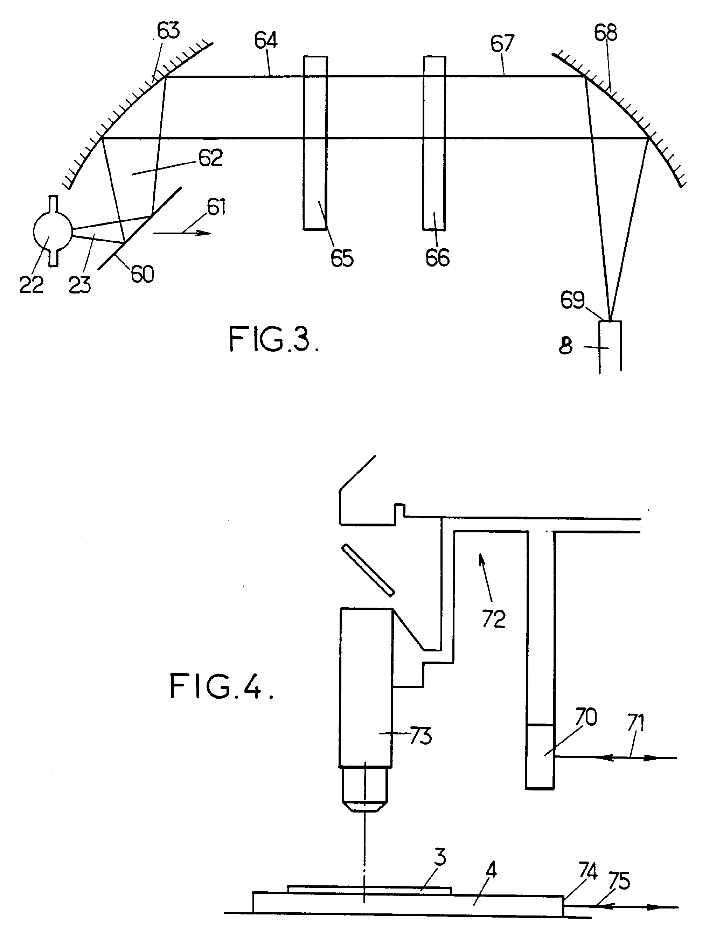

La figure 3 montre un mode de réalisation avantageux du condenseur du dispositif selon l'invention.

Le faisceau 23 de la lampe à arc 22 de forte puissance (50 à 500 W, notamment 150 W), par exemple au xénon, est reçu par un filtre dichroïque anticalorique 60 laissant passer l'infrarouge 61 et réfléchissant l'U.V. et la lumière visible 62 sur un miroir paraboloïde 63 hors d'axe ("off-axis" en terminologie anglo-saxonne).

Le faisceau collimaté 64 est filtré par un filtre 65 pour l'U.V. et le visible, par exemple déplaçable perpendiculairement au faisceau collimaté 64 de façon identique au filtre 26 décrit ci-avant et un dispositif 66 permettant de faire varier la densité lumineuse de façon continue, tout comme la lame 27 également décrite ci-avant.

Le faisceau collimaté 67 ainsi traité est réfléchi à nouveau sur un deuxième paraboloïde hors axe 68 et focalisé sur la surface d'entrée 69 plane de la fibre optique 8 du dispositif 2.

Les miroirs paraboloïdes hors axe sont avantageusement recouverts d'un matériau, réflecteur pour l'U.V. et la lumière visible, avantageusement du rhodium.

Sur la figure 4 on a représenté schématiquement une disposition préférée d'une partie des moyens interférométriques 6 de mesure de la position de la table 4, sur laquelle la tranche 3 est placée. Ces moyens comprennent un miroir 70 propre à réfléchir le faisceau de référence 71 d'un interféromètre laser. Le miroir 70 est relié rigidement par des moyens 72, par exemple partiellement amovibles, à l'objectif 73 de mesure. La mesure différentielle s'effectue entre le miroir 70 et un miroir 74 fixé rigidement à la table 4 sur laquelle la tranche 3 est posée.

Une très grande précision peut ainsi être obtenue sur le positionnement de la tranche 3 par rapport à l'objectif 73 du microscope 7 du fait de cette liaison rigide entre miroir 70 et objectif 73.

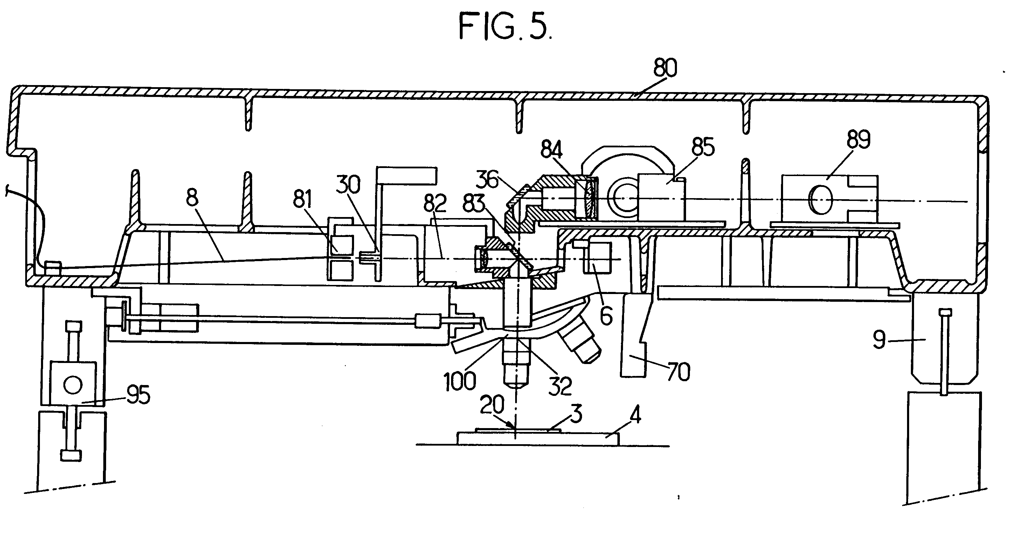

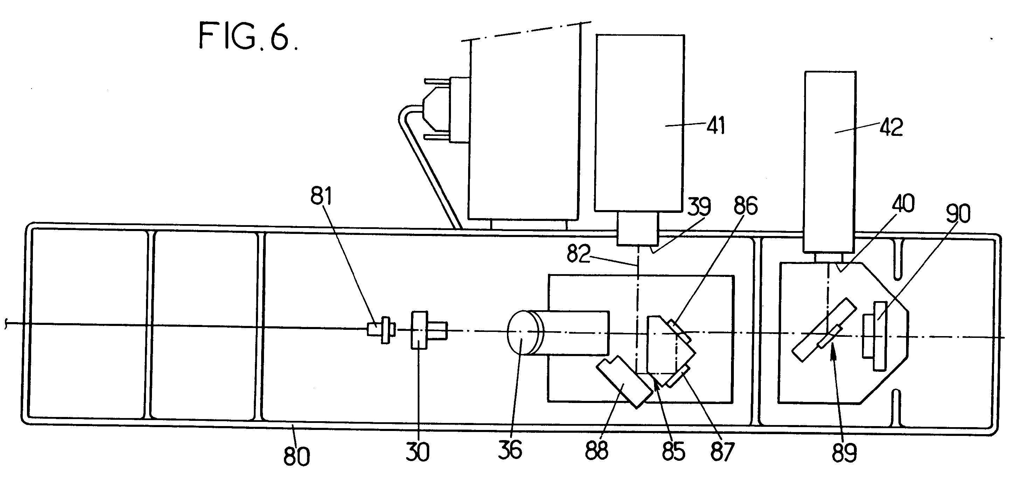

Dans le mode de réalisation avantageux de la partie optique montré en figures 5 et 6, le microscope 7 comporte une structure porteuse 80. La fibre optique 8 est centrée et fixée rigidement à cette structure par une pièce de fixation 81. Le trajet du faisceau issu de la fibre optique est représenté par un trait mixte 82.

On trouve essentiellement et successivement sur ce trajet :

. un diaphragme 30 de centrage de faisceau, amovible et remplaçable par une série de diaphragmes appropriés, sélectionnés de façon à obtenir un éclairage optimum parfaitement centré de l'objet à mesurer,

. une lame séparatrice 83 entre faisceau incident et faisceau réfléchi, permettant de diriger la totalité de l'énergie du faisceau issu de la monofibre 8, sous incidence normale, vers l'objet 20 situé sur la tranche 3 reposant sur la table 4, via l'objectif de microscope 32,

. l'objectif 32, monté sur un barillet automatique 100 portant par exemple trois autres objectifs permettant de couvrir des champs de quelques microns à quelques millimètres,

. à nouveau, le miroir 83, cette fois transparent au faisceau réfléchi orthogonalement par l'objet,

. un miroir 36 permettant de diriger le faisceau réfléchi, via les moyens optiques 84 (par exemple constitués par un système de lentilles de focalisation) vers des moyens de réception du faisceau. Ces moyens de réception comprennent avantageusement :

. des moyens 85 de séparation entre la lumière visible et ultraviolette du faisceau réfléchi par l'objet, comprenant (figure 6) :

- une lame 86, constituant un filtre U.V./lumière visible, laissant passer la lumière visible et réfléchissant les U.V. vers un jeu de miroirs 87, 88 et la matrice de capteurs 39 de la caméra U.V. CCD 41,
- des moyens 89 pour extraire du faisceau réfléchi par l'objet, une partie de l'énergie restante dans le visible, représentés par une lame séparatrice dirigeant cette partie de l'énergie vers le capteur 40 d'une caméra CCD 42 sensible à la lumière visible. des moyens optiques 90 pour focaliser l'énergie restante du faisceau vers des moyens d'analyse spectrophotométrique 52 non représentés sur les figures 5 et 6 et connus en eux-mêmes.

Ces moyens d'analyse 52 permettent notamment de minimiser les contrastes entre l'objet et son environnement en agissant via les moyens de calcul 43 et les moyens actionneurs 50, sur le filtre variateur de longueur d'onde 26 et sur le variateur de densité lumineuse 27 constitué par exemple par une lame d'opacité variable (voir figure 2).

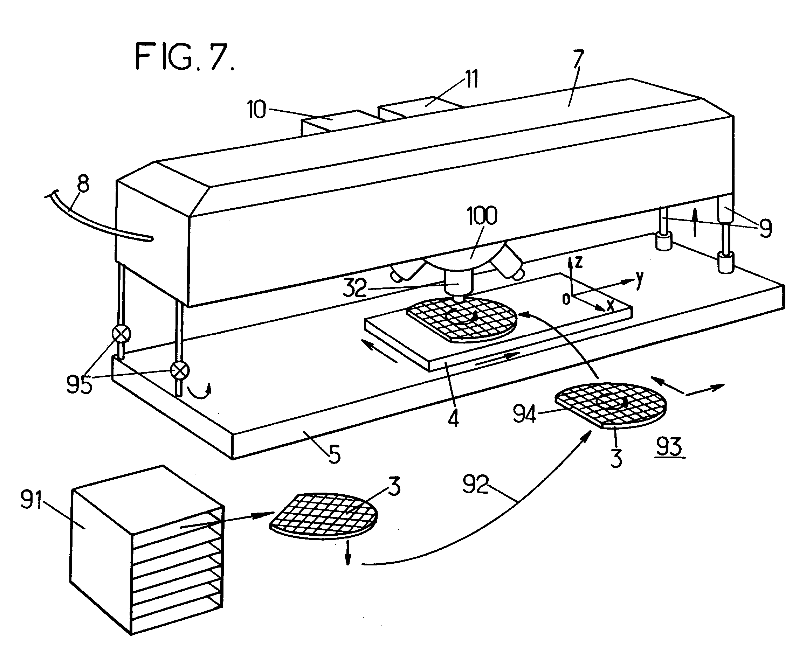

Le fonctionnement du dispositif selon l'invention est maintenant décrit ci-après, en se référant plus particulièrement à la figure 7.

Une tranche 3 comportant des tracés de circuits intégrés est sélectionnée et extraite d'un boîtier 91 de stockage par l'intermédiaire d'un bras robot automatique (non représenté) prenant la tranche par aspiration (pompe à vide).

La tranche est ensuite transférée (flèche 92) vers une station de préalignement 93 où elle est orientée, le pan coupé 94 pouvant par exemple être orienté suivant Ox ou Oy, par des moyens non représentés.

La tranche 3 est ensuite placée automatiquement sur la table 4 à coussin d'air par le bras robot automatique, sous l'objectif 32 du microscope 7.

## Alignement

L'image des circuits intégrés de la tranche 3 est alors formée sur le capteur de la caméra matricielle 42 en lumière visible et convertie en signaux numériques.

Les signaux numériques sont traités à très grande vitesse par les moyens de traitement 12 qui commandent l'alignement automatique global, en X, Y et $\theta$ (alignement angulaire) de la tranche.

Une fois cet alignement réalisé, le tout étant commandé et contrôlé à l'aide des moyens interférométriques 6, le plateau 4 vient se mettre automatiquement dans une position de départ prédéterminée, de mesure des objets, c'est-à-dire des tracés, figurant sur la tranche 3.

Les mesures de largeur de trait (C.D.), de recouvrement de couche, et/ou de cartographie sont alors effectuées.

Le champ du microscope est réduit par changements successifs d'objectifs (rotation automatique de la tourelle 100) pour atteindre 60 $\mu$m par exemple.

A chaque fois, le système d'autofocalisation 33 met au point sur l'objet. Dans un mode avantageux de réalisation de l'invention, il actionne les vérins 9 suivant Oz, les points d'appui opposés de la structure 80 étant par exemple montés sur rotules 95.

## Mesures de recouvrement et dimensionnelles

Chaque circuit intégré, ou chaque partie de circuit intégré, est alors examiné successivement suivant un cycle programmé, la table 4 avançant pas à pas suivant les directions Ox et/ou Oy.

Les signaux successifs obtenus sur les caméras CCD sont traités à l'aide des moyens de traitement 43. Les mesures de recouvrement utilisent l'image dans le visible, où les résines sont transparentes, fournie par la caméra 42. Les mesures dimensionnelles sont effectuées à une longueur d'onde dans l'UV où les résines sont opaques, à partir de la caméra 41, avantageusement à une longueur d'onde d'environ 300 nm.

Ces deux types de mesure sont effectuées successivement, la mise au point étant maintenue par le système 33.

Une fois ces mesures effectuées, la tranche est déchargée et ramenée dans son boîtier 91 de stockage par le bras robot, de façon automatique.

Comme exposé précédemment, le procédé et le dispositif de l'invention permettent d'obtenir des résultats meilleurs que ceux antérieurement obtenus.

Afin de mieux faire ressortir cet avantage, il est fourni ci-après des tableaux comparatifs entre l'invention et l'art antérieur, sur l'ordre de grandeur des précisions obtenues et les aptitudes à la répétition des mesures effectuées, dans les domaines de la mesure de largeur de trait, de la mesure du recouvrement entre couches et de la cartographie.

TABLEAU I

| MESURE DE LARGEUR DE TRAIT | INVENTION | | ART ANTERIEUR (METHODES A SEUIL) | |
|---|---|---|---|---|
| | Précision | Aptitude à la répétition | Précision | Aptitude à la répétition |
| Résine (couche épaisse >0,8μm) | ± 0,07 μm | 0,01 μm<br>3 σ<br>3x écart type | non définie | 0,03 μm<br><br>3 σ |
| Résine (couche mince <0,8μm)<br>sur tout type de matériau<br>-largeur de trait >0,5μm | ± 0,02 μm | 0,02 μm<br>(à 3x l'écart type) | non définie (> 1μm) | 0,03 μm<br>3 σ |
| -largeur de trait >0,3μm (avec U.V.) | ± 0,01 μm | 0,01μm<br>3 σ | | |

EP 0 401 351 B1

TABLEAU  2

| MESURE DE RECOUVREMENT (Overlay) | INVENTION | | ART ANTERIEUR | |
|---|---|---|---|---|
| | Précision | Aptitude à la répétition | Précision | Aptitude à la répétition |
| Couche non métallique<br><br>- différence de hauteur entre motifs < 1,5 µm | ± 20 nm | 3 nm<br>(à 3 $\sigma$) | ± 60 nm | 20 nm<br>(3 $\sigma$) |
| Couche métallique<br><br>- hauteur de trait > 20µm<br>- différence de hauteur entre motifs < 1µm | ± 50 nm | 10 nm<br>(à 3$\sigma$) | ± 100 nm | 100 nm<br>(3 $\sigma$) |

EP 0 401 351 B1

TABLEAU 3

| CARTOGRAPHIE (de coordonnées) | INVENTION | | ART ANTERIEUR | |
|---|---|---|---|---|
| | Précision | Aptitude à la répétition | Précision | Aptitude à la répétition |
| Pour tout type de couches (> 20 μm) | 50 nm 3 σ | 30 nm (à 3σ) | 200 nm 3 σ | 100 nm 3 σ |
| Sur masques ou réticules | idem | idem | 50 nm 3 σ | 40 nm 3 σ |

L'invention est notamment utilisable dans le domaine de la vérification et du contrôle des dimensions caractéristiques de masques ou topographies de circuits intégrés et pour des mesures d'objets de dimensions supérieures au μm, par exemple 1,5 μm.

EP 0 401 351 B1

**Revendications**

1. Procédé de mesure optique de dimension submicronique d'un objet (20) ou du recouvrement entre deux objets (20'), caractérisé en ce que :
   - on émet, avec une lampe à arc (22), un faisceau de lumière (23) dans une monofibre optique (8) de diamètre supérieur à 500 µm et de longueur supérieure à 3 mètres,
   - on dirige, le pinceau lumineux (29) issu de la monofibre (8) optique vers l'objet (20) ou les objets (20') sous incidence normale et on le focalise sur l'objet par l'intermédiaire d'un objectif (32) de microscope (7), la mise au point sur l'objet à mesurer étant effectuée automatiquement par un système (33) d'autofocalisation fonctionnant en infrarouge,
   - on sépare le pinceau réfléchi ayant traversé l'objectif (32) du microscope du pinceau incident et on le dirige sur le capteur (39,40) d'une caméra matricielle (41,42) à couplage de charges muni de moyens (43) de numérisation fournissant une représentation pixel par pixel du champ du microscope,
   - et on traite les signaux spatiaux ainsi obtenus pour reconstituer, à partir desdits signaux, les frontières de l'objet (20) pour mesurer la distance entre ces frontières ou pour mesurer le recouvrement entre deux objets (20') dans le champ.

2. Procédé de mesure optique selon la revendication 1, caractérisé en ce qu'on utilise la lumière visible et ultraviolette pour déterminer le recouvrement entre deux objets et la lumière ultra-violette pour le contrôle dimensionnel de l'objet.

3. Dispositif de mesure optique de dimension submicronique d'un objet (20), ou du recouvrement entre deux objets (20'), comprenant :
   - une optique (28) placée sur le trajet d'un pinceau de lumière, pour diriger ce pinceau de lumière sur l'objet (20) ou les objets (20'), sous incidence normale, ladite optique (28) ayant au moins un objectif achromatique (32,73) de microscope à mise au point automatique sur l'objet, par autofocalisation, et
   - des moyens optiques (34) placés sur le trajet du pinceau réfléchi (35) issu de l'objectif du microscope pour renvoyer au moins une partie de l'énergie dudit pinceau réfléchi vers une première caméra matricielle (41) et pour renvoyer au moins une partie de l'énergie dans le visible dudit pinceau réfléchi vers une autre caméra matricielle (42),
   - un convertisseur de numérisation (43), fournissant une représentation pixel par pixel de l'image du champ du microscope, fournie par l'une ou l'autre des caméras, sous forme de signaux spatiaux,
   - et des moyens informatiques (44) de traitement des signaux spatiaux obtenus, permettant de reconstituer, à partir desdits signaux, les frontières de l'objet (20) et de mesurer la distance entre ces frontières, ou de mesurer le recouvrement entre deux objet (20'),
   caractérisé en ce que le faisceau de lumière est fourni à l'optique par un système (21) à fibre optique comportant une lampe à arc (22), un condenseur (24), et une monofibre optique (8) de diamètre supérieur à 500 µm et de longueur supérieure à 3 mètres, fournissant de la lumière contenant au moins deux longueurs d'onde prédéterminées, l'une dans le visible et l'autre dans l'ultra-violet.

4. Dispositif selon la revendication 3, caractérisé en ce que le condenseur (21) est un condenseur achromatique dans le visible et l'ultra-violet comprenant :
   - un filtre (60) dichroïque anticalorique,
   - un premier miroir (63) paraboloïdique hors axe propre à collimater la lumière qu'il réfléchit vers un deuxième miroir (68) paraboloïdique hors axe propre à recondenser ladite lumière en un point et,
   - des moyens (65,66) de filtrage de ladite lumière dans le visible et l'ultra-violet disposée sur le trajet du faisceau de lumière collimaté entre les deux dits miroirs paraboloïdiques hors axes (63,68).

5. Dispositif selon la revendication 3, caractérisé en ce que lesdits moyens optiques (34) comprennent des séparateurs (37,38) placés sur le trajet du pinceau réfléchi issu de l'objectif du microscope pour séparer la composante U.V. de la composante visible, renvoyer la composante U.V. vers le capteur (39) d'une caméra matricielle U.V. (41) et renvoyer la composante visible vers le capteur (40) d'une caméra matricielle en lumière visible (42).

6. Dispositif selon l'une quelconque des revendications 3, 4 et 5, caractérisé en ce qu'il comprend des séparateurs (38,46) placés sur le trajet du pinceau réfléchi issu de l'objectif du microscope pour renvoyer au moins une partie de l'énergie du pinceau réfléchi vers le capteur (47) d'une caméra couleur (48) fournissant une représentation visuelle de l'objet (20,20') observé.

7.  Dispositif selon la revendication 3, 4 ou 5, caractérisé en ce qu'il comprend des moyens (51) placés sur le trajet du pinceau réfléchi issu de l'objectif pour diriger au moins une partie de l'énergie dudit pinceau réfléchi vers des moyens d'analyse spectrophotométriques (52), et à partir des moyens informatiques (44) de traitement des signaux obtenus sur la ou les caméras matricielles (41,42), pour minimiser les contrastes entre l'objet et son environnement immédiat.

8.  Dispositif selon la revendication 3, 4 ou 5, caractérisé en ce que les moyens informatiques (44) de traitement des signaux fournis par la ou les caméras matricielles (41,42) comportent des moyens de mesure et de contrôle automatique de la largeur des traits (20) sur une tranche (3) portant des tracés de circuits intégrés.

9.  Dispositif selon la revendication 3, 4 ou 5, caractérisé en ce que les moyens informatiques (44) de traitement des signaux obtenus par la ou les caméras matricielles (41,42) comportent des moyens de mesure et de contrôle automatique du recouvrement des couches minces (20') constitutives d'une tranche (3) portant des tracés de circuits intégrés.

10. Dispositif selon la revendication 3, 4 ou 5, caractérisé en ce qu'il comporte des moyens (33) interférométriques en lumière cohérente, de positionnement par rapport à une position de référence, d'une table (4) sur laquelle l'objet (20) observé est placé, lesdits moyens comportant un miroir de référence (71) relié rigidement à l'objectif (73) de mesure et un miroir (74) fixé rigidement à la table (4).

11. Dispositif suivant l'une quelconque des revendications 3 à 10, destiné à la mesure du recouvrement entre deux objets, caractérisé en ce que les moyens informatiques (44) sont prévus pour effectuer un calcul de la fonction d'intercorrélation desdits signaux spatiaux et des signaux symétriques de ces signaux par rapport à une origine spatiale arbitraire.

**Patentansprüche**

1.  Verfahren zur optischen Messung von Abmessungen im Submikrometerbereich eines Objekts (20) oder der Überdeckung zwischen zwei Objekten (20'),
    **gekennzeichnet durch**
    - die Emission eines Lichtbündels (23) durch eine Bogenlampe (22) in eine Lichtwellenleiter-Monofaser (8) mit einem Durchmesser größer als 500 μm und einer Länge größer als 3 m,
    - das Leiten der aus der Lichtwellenleiter-Monofaser (8) kommenden Lichtstrahlen (29) auf das Objekt (20) oder die Objekte (20') unter orthogonalem Einfall und das Bündeln der Lichtstrahlen auf das Objekt mittels eines Objektivs (32) eines Mikroskops (7), wobei das Fokussieren auf das zu messende Objekt automatisch durch ein im Infraroten arbeitendes Autofokussiersystem (33) bewirkt wird,
    - das Trennen der reflektierten, durch das Mikroskopobjektiv (32) hindurchgegangenen Strahlen von den einfallenden Strahlen und das Leiten derselben auf den Sensor (39,40) einer Ladungskopplungsmatrixkamera (41,42), welche eine pixelweise Darstellung des Mikroskopfelds erzeugende Digitalisierungsmittel (43) aufweist,
    - und das Verarbeiten der so erzeugten räumlichen Signale zum Rekonstruieren der Ränder des Objekts (20) ausgehend von diesen Signalen, zum Messen der Entfernung zwischen diesen Rändern oder zum Messen der Überdeckung zwischen zwei Objekten (20') im Feld.

2.  Verfahren zur optischem Messung nach Anspruch 1, dadurch gekennzeichnet, daß zum Bestimmen der Überdeckung zwischen zwei Objekten sichtbares Licht und ultraviolettes Licht verwendet wird und zur Abmessungskontrolle des Objekts ultraviolettes Licht verwendet wird.

3.  Vorrichtung zur optischen Messung der Abmessung im Submikrometerbereich eines Objekts (20) oder der Überdeckung zwischen zwei Objekten (20') umfassend:
    - eine Optik (28) im Strahlengang von Lichtstrahlen zum Leiten dieser Lichtstrahlen auf das Objekt (20) oder die Objekte (20') unter orthogonalem Einfall, wobei die Optik (28) wenigstens ein achromatisches Mikroskopobjektiv (32,73) mit automatischer Scharfstellung auf das Objekt durch Autofokussierung aufweist, und
    - optische Mittel (34) im Strahlengang der vom Mikroskopobjektiv kommenden reflektierten Lichtstrahlen (35) zum Umlenken wenigstens eines Teils der Energie der reflektierten Lichtstrahlen auf eine erste Matrixkamera (41) und zum Umlenken wenigstens eines Teils der Energie im sichtbaren Bereich der reflektierten Lichtstrahlen auf eine andere Matrixkamera (42),

- einen Digitalisierungswandler (43), der eine pixelweise Darstellung des Bilds des Mikroskopfelds erzeugt, welches Bild durch die eine oder die andere Kamera in der Form von räumlichen Signalen erzeugt wird,
- und Datenverarbeitungsmittel (44) zur Verarbeitung der erhaltenen räumlichen Signale, welche es ermöglichen, von diesen Signalen ausgehend die Ränder des Objekts (20) zu rekonstruieren und die Entfernung zwischen diesen Rändern zu messen oder die Überdeckung zwischen zwei Objekten (20') zu messen,

**dadurch gekennzeichnet**, daß

das Lichtbündel zur Optik durch ein Lichtleitersystem (21) geliefert wird, welches eine Bogenlampe (22), einen Kondensor (24) und eine Lichtwellenleiter-Monofaser (8) mit einem Durchmesser, größer als 500 µm, und einer Länge größer als 3 m, umfaßt und Licht liefert, welches wenigstens zwei vorbestimmte Wellenlängen enthält, wobei die eine im sichtbaren Bereich und die andere im ultravioletten Bereich liegt.

4. Vorrichtung nach Anspruch 3, dadurch gekennzeichnet, daß der Kondensor (21) ein achromatischer Kondensor im Sichtbaren und im Unsichtbaren ist, umfassend:
   - einen dichroitischen, antikalorischen Filter (60),
   - einen ersten außerachsigen, Parabolspiegel (63), der geeignet ist, das Licht, das er reflektiert, zu einem zweiten außerachsigen, Parabolspiegel (68) zu kollimieren, der geeignet ist, das Licht wieder in einen Punkt zu verdichten, und
   - Mittel (65,66) zum Filtern des Lichts im Sichtbaren und im Ultravioletten, welche im Strahlengang des kollimierten Lichtbündels zwischen den zwei außerachsigen Parabolspiegeln (63,68) angeordnet sind.

5. Vorrichtung nach Anspruch 3, dadurch gekennzeichnet, daß die optischen Mittel (34) im Strahlengang der vom Mikroskopobjektiv kommenden reflektierten Strahlen angeordnete Trennelemente (37,38) umfassen, zum Trennen der UV-Komponente von der sichtbaren Komponente, zum Umlenken der UV-Komponente auf den Sensor (39) einer UV-Matrixkamera (41) und zum Umlenken der sichtbaren Komponente auf den Sensor (40) einer Matrixkamera (42) für sichtbares Licht.

6. Vorrichtung nach einem der Ansprüche 3, 4 und 5, dadurch gekennzeichnet, daß sie im Strahlengang der vom Mikroskopobjektiv kommenden reflektierten Strahlen angeordnete Trennelemente (38,46) umfaßt, zum Umlenken wenigstens eines Teils der Energie der reflektierten Strahlen auf den Sensor (47) einer Farbkamera (48), welche eine visuelle Darstellung des beobachteten Objekts (20,20') liefert.

7. Vorrichtung nach Anspruch 3, 4 oder 5, dadurch gekennzeichnet, daß sie im Strahlengang der vom Objektiv kommenden reflektierten Strahlen angeordnete Mittel (51) umfaßt, zum Leiten wenigstens eines Teils der Energie der reflektierten Strahlen auf spektralphotometrische Analysemittel (52) und zum Minimieren der Kontraste zwischen dem Objekt und seiner unmittelbaren Umgebung, ausgehend von Datenverarbeitungsmitteln (41) für von der oder den Matrixkameras (41,42) erhaltene Signale.

8. Vorrichtung nach Anspruch 3, 4 oder 5, dadurch gekennzeichnet, daß die Datenverarbeitungsmittel für die von der oder den Matrixkameras (41,42) kommenden Signale Mittel zum Messen und zur automatischen Kontrolle der Breite von Strichen (20) auf einem Leiterbahnen von integrierten Schaltungen tragenden Wafer (3) umfaßt.

9. Vorrichtung nach Anspruch 3, 4 oder 5, dadurch gekennzeichnet, daß die Datenverarbeitungsmittel (44) für die von der oder den Matrixkameras (41,42) erhaltenen Signale Mittel zum Messen und zur automatischen Kontrolle der Überdeckung dünner Schichten (20') umfaßt, welche für einen Leiterbahnen von integrierten Schaltungen tragenden Wafer (3) wesentlich sind.

10. Vorrichtung nach Anspruch 3, 4 oder 5, dadurch gekennzeichnet, daß sie Kohärenzlicht-Interferometrie-Mittel (33) umfaßt, zum Positionieren eines Tisches (4), auf welchem das beobachtete Objekt angeordnet ist, in bezug auf eine Referenzposition wobei die Mittel einen Referenzspiegel (71), der starr mit dem Meßobjektiv (73) verbunden ist, umfassen, sowie einen Spiegel (74), der starr mit dem Tisch (4) verbunden ist.

**11.** Vorrichtung nach einem der Ansprüche 3 bis 10, die dazu bestimmt ist, die Überdeckung zwischen zwei Objekten zu messen, dadurch gekennzeichnet, daß die Datenverarbeitungsmittel (44) vorgesehen sind zum Durchführen einer Interkorrelationsfunktionsberechnung der räumlichen Signale und der symmetrischen Signale dieser Signale in bezug auf einen willkürlichen räumlichen Ursprung.

## Claims

**1.** Method for optically measuring the submicron dimensions of an object (20) or the overlay between two objects (20) characterized in that:

a light beam (23) is emitted by means of an arc lamp (22) into an optical monofiber (8) of a diameter greater than 500 microns and of a length greater than 3 m,

the light beam (29) from the optical monofiber (8) is directed onto the object (20) or objects (20') at normal incidence, and is focussed onto the object through objective lens (32) of a microscope (7), focussing on the object to be measured being carried out automatically by a self-focussing system (33) operating in infrared,

the reflected beam passing through the microscope objective lens (32) is separated from the incident beam and is directed onto a sensor (39, 40) of a CCD matrix camera (41, 42) having digitization means (43) delivering a pixel by pixel representation of the field of the microscope, and

the space representation signals thus obtained are processed in order to reconstitute, from said signals, the contours of the object (22) for measuring the distance between these contours, or for measuring the mutual overlay of two objects (20') in the field.

**2.** Optical measuring method according to claim 1, characterized in that visible and ultraviolet light is used for determining the amount of overlay between two objects and ultraviolet light for the dimensional control of the object.

**3.** Device for optically measuring the submicron dimensions of an object (20) or the amount of overlay between two objects (20'), comprising:

an optical system (28) placed on the path of a light beam for directing said light beam onto the object (20) or the objects (20) at normal incidence, said optical system having at least one achromatic microscope lens (32, 73) with self-focussing on the object, and

optical means (34) placed in the path of the reflected beam (35) coming from the microscope objective lens for sending at least a part of the energy of said reflected beam towards a first matrix camera (41) and for sending a part of the energy in the visible of said reflected beam towards another matrix camera (42)

a digitization converter (43) delivering a pixel by pixel representation of the image of the field of the microscope delivered by one or other of the cameras, as space representation signals,

and data processing means (44) for processing the space representation signals obtained, for reconstituting from said signals the contours of the object (20) and measuring the distance between these contours, or measuring the amount of overlay between two objects (20'),

characterized in that the light beam is delivered to the optical system by an optical fiber system (21) comprising an arc lamp (22), a condenser (24) and an optical monofiber (8) of a diameter greater than 500 microns and of a length greater than 3 m, delivering light containing at least two predetermined wavelengths, one in the visible and the other in the ultraviolet.

**4.** Device according to claim 3, characterized in that the condenser (21) is an achromatic condenser in the visible and ultraviolet comprising:

an anti-heat dichroic filter (60),

a first off-axis paraboloid mirror (63) adapted for collimating the light which it reflects towards a second off-axis paraboloid mirror (68) adapted for focussing said light at a point, and

means (65, 66) for filtering said light in the visible and ultraviolet disposed in the path of the collimated light beam between said two off-axis paraboloid mirrors (63, 68).

**5.** Device according to claim 3, characterized in that said optical means (34) comprise separators (37, 38) placed on the path of the reflected beam coming from the microscope objective lens for separating the U.V. component from the visible component, sending the U.V. component towards the sensor (39) of a U.V. matrix camera (41) and sending the visible component toward the sensor (40) of a visible light matrix camera (42).

6. Device according to any one of claims 3, 4 and 5, characterized in that it comprises separators (38, 46) placed in the path of the reflected beam coming from the objective lens of the microscope for directing at least a part of the energy of said reflected beam towards the sensor (47) of a color camera (48) delivering a visual representation of the observed object (20, 20').

7. Device according to claim 3, 4 or 5, characterized in that it comprises means (51) placed in the path of the reflected beam coming from the objective lens for directing at least a part of the energy of said reflected beam toward spectrophotometric analysis means (52) and, from the data processing means (43) processing the signals obtained on the matrix camera or cameras (41, 42), for minimizing the contrasts between the object and its immediate environment.

8. Device according to claim 3, 4 or 5, characterized in that the data processing means (44) for processing the signals delivered by the matrix camera or cameras (41, 42) comprise means for measuring and automatically monitoring the width of lines (20) on a wafer (3) carrying integrated circuit patterns.

9. Device according to claim 3, 4 or 5, characterized in that the data processing means for processing the signals obtained by the matrix camera or cameras (41, 42) comprise means for measuring and automatically monotoring the amount of overlay of the layers (20') of a wafer (3) carrying integrated circuit patterns.

10. Device according to claim 3, 4 or 5, characterized in that it comprises coherent light interferometric means (33) for positioning, with respect to a reference position, a table (4) on which the observed object (20) is placed, said means comprising a reference mirror (71) connected rigidly to the measuring objective lens (73) and a mirror (74) fixed rigidly to the table (4).

11. Device according to any one of claims 3-10, for measurement of the amount of overlay of two objects, characterized in that the data processing means (44) are arranged for computing the intercorrelation function between said signals and the symmetrical image of said signals with respect to an arbitrary origin.

# FIG.1.

FIG.2.

FIG.3.

FIG.4.

FIG.5.

EP 0 401 351 B1

FIG.6.

EP 0 401 351 B1

FIG. 7.

EP 0 401 351 B1